# NEUE EUROPÄISCHE PATENTSCHRIFT

(11) **EP 0 416 317 B2**
(45) Veröffentlichungstag und Bekanntmachung des Hinweises auf die Entscheidung über den Einspruch: **08.04.1998**
(45) Hinweis auf die Patenterteilung: 12.05.1993
(21) Anmeldenummer: 90115349.4
(22) Anmeldetag: 10.08.1990
(51) Int. Cl.: F16L 39/00, F16L 47/02, F16L 13/02

(54) **Doppelrohrelement**
Double-walled pipe element
Elément de tuyau à double paroi

(30) Priorität: 31.08.1989 DE 8910408 U
(43) Veröffentlichungstag der Anmeldung: 13.03.1991
(73) Patentinhaber: KUNSTSTOFFWERK HÖHN GmbH, D-56462 Höhn/Westerwald (DE)
(72) Erfinder: Niemann, Heinrich, D-5432 Wirges (DE)
(74) Vertreter: Müller-Gerbes, Margot, Dipl.-Ing.

(56) Entgegenhaltungen:
- EP-A- 63 329
- EP-A- 399 123
- DE-A- 2 644 349
- DE-A- 2 744 674
- DE-B- 2 626 813
- DE-U- 1 870 244
- DE-U- 7 628 079
- DE-U- 8 134 419
- DE-U- 8 807 095
- FR-A- 2 341 094
- US-A- 1 481 255
- US-A- 4 786 088
- WELDING INTERNATIONAL. vol. 2, no. 5, 1988, ABINGTON GB Seiten 432 - 443; G.ANTONIETTI ET AL: "Developments in the welding of PE 50 polyethylene pipes and in the relevant qualifications"

## Beschreibung

Bei Rohrleitungssystemen gewinnen, bedingt durch immer weiter steigende Anforderungen bezüglich Sicherheit und Umweltschutz, zweischalige Rohrkonstruktionen, sogenannte "Doppelrohrsysteme", immer stärker an Bedeutung. Bei einem derartigen Doppelrohr wird bei Versagen des inneren, von einem Medium durchströmten Rohres, die Leckflüssigkeit von der Außenschale am Austreten gehindert.

Bekannt sind z. B. Rohrsysteme, bei denen der Hohlraum zwischen Innen- und Außenrohr mit einem Polymerschaum oder anderem Dämmaterial vefüllt ist. Dies hat jedoch den Nachteil, daß der Hohlraum nur schwer mit einem Leckwarnsystem überwacht werden kann.

Bekannte unvefüllte Systeme besitzen eine Reihe von Nachteilen:
1. Bei unterschiedlichen Temperaturen von Medium und Außenrohr kommt es zu einem Gleiten des Innenrohres, bedingt durch unterschiedliche thermische Ausdehnungen. Dies macht sich, besonders bei längeren Rohrabschnitten, an Rohrkrümmungen und Verzweigungen störend bemerkbar.
2. Die zuverlässige Zentrierung des Innenrohres gestaltet sich insbesondere an Verbindungsstellen äußerst schwierig, was die Systemmontage sowie Reparaturen beträchtlich erschwert.

So wird beispielsweise im Deutschen Gebrauchsmuster G 88 07 095.6 ein Bausatz zum Aufbau eines Doppelrohr-Leitungssystems beschrieben, bei dem die einzelnen Teile wie Innenrohr, Abstandshalter, Außenrohr und Fittings nacheinander zusammengebaut werden. Abgesehen von der aufwendigen Montage besitzt ein derartiges System den Nachteil, daß beim Vorliegen einer Temperaturdifferenz zwischen Innen- und Außenrohr eine beträchtliche Längsverschiebung des Innenrohrs stattfinden kann. Spezielle Scheiben, die bei der Montage in die Fittings eingepaßt werden, sollen bei Bedarf dort eine Fixierung bewirken. Dies macht die Montage noch komplizierter.

In der US-PS 4 723 441 werden Doppelrohrabschnitte mit speziellen Fittings formschlüssig verbunden. Dieses System weist hinsichtlich Montage sowie Längsverschiebung des Innenrohrs die gleichen Nachteile wie das zuvor genannte auf.

Die US-PS 4 779 652 beschreibt Doppelrohrelemente, bei denen Innen- und Außenrohr durch axial angeordnete Rippen getrennt sind. Es wird dort hervorgehoben, daß die beiden Rohre und die Rippen einen einheitlichen Formkörper darstellen. Die dort beschriebenen Doppelrohrelemente können in der benötigten Ausführung jedoch offenbar nur duch Spritzguß hergestellt werden. Dies bedeutet, daß jedes einzelne Element zur Herstellung eine eigene Form benötigt, was der Variabilität des Systems enge Grenzen setzt. Zudem sind Spritzgußformen außerordentlich teuer und daher nur bei Großserien rentabel. Abweichungen von den vorgegebenen Maßen verbieten sich aus diesen Gründen. Daher wäre es wünschenswert, Doppelrohrelemente zur Verfügung zu haben, die aus Extrusionsrohren zusammengesetzt sind.

Die Doppelrohrelemente der US-PS 4 779 652 stellen ein Modulsystem dar, dessen Endmontage wegen der geringeren Anzahl der Teile wesentlich erleichtert ist Ein Verbinden der Enden duch Zusammenschweißen ist jedoch nur möglich, wenn das Innenrohr nicht nur exakt zentriert, sondern auch jeder Verzug ausgeschlossen ist. Daher ist es vorteilhaft, wenn beim Verschweißen eine Einspannvorrichtung verwendet wird. Aus diesem Grund und wegen der fehlenden Variabilität kann ein derartiges System in der Praxis nicht befriedigen.

Schließlich wird in der US-PS 4 786 088 ein Doppelrohrsystem mit am Innenrohr angebrachten, die Rohre zentrierenden Distanzhaltern vorgestellt, bei dem in gewissen Abständen Kupplungen angebracht sind, die die Kräfte bei Ausdehnung des Innenrohrs aufnehmen. Jedoch ist die Montage überaus aufwendig, da mangels vorgefertigter Elemente eine Vielzahl von Einzelteilen zusammengebaut werden muß.

Es stellte sich daher die Aufgabe, ein leicht montierbares System aus einzeln werksseitig herstellbaren Rohrelementen zu entwickeln, deren Enden exakt kreisförmig sind und die sich daherohne Verwendung einer besonderen Einspannvorrichtung zusammenschweißen lassen. Zudem sollten diese Rohrelemente in ihren Ausmaßen variabel sein, so daß nicht jedes Sondermaß die Anfertigung einer eigenen Spritzgußform erfordert. Selbstverständlich darf dabei keine nennenswerte Dezentrierung des Innenrohrs relativ zum Außenrohr stattfinden.

Diese Aufgabe wird gelöst durch Doppelrohrelemente aus thermoplastischem Kunststoff, die miteinanderverschweißbar sind und dadurch gekennzeichnet sind, daß
a) an beiden Enden zwischen das Innenrohr **1** und das Außenrohr **2** je ein Zentrierring **4** durch Einpressen eingebracht ist;
b) an die beiden Enden je ein Anschlußring **5** angeschweißt ist, der Innen- und Außenrohr starr miteinander verbindet;
c) ggf. Abstandsringe **3** als Distanzhalter am Innenrohr angebracht sind.

Die Form der Abstandsringe **3** ist hierbei unkritisch, solange die Funktion als Distanzhalter gewährleistet ist.

Genauso ist die Form der Zentrierringe **4** unkritisch, solange die Funktion als Versteifungselement gewährleistet ist. In der Regel besitzen sie einen rechteckigen Querschnitt, weil sie sich in dieser Form am besten zwischen Innen- und Außenrohr einpressen lassen.

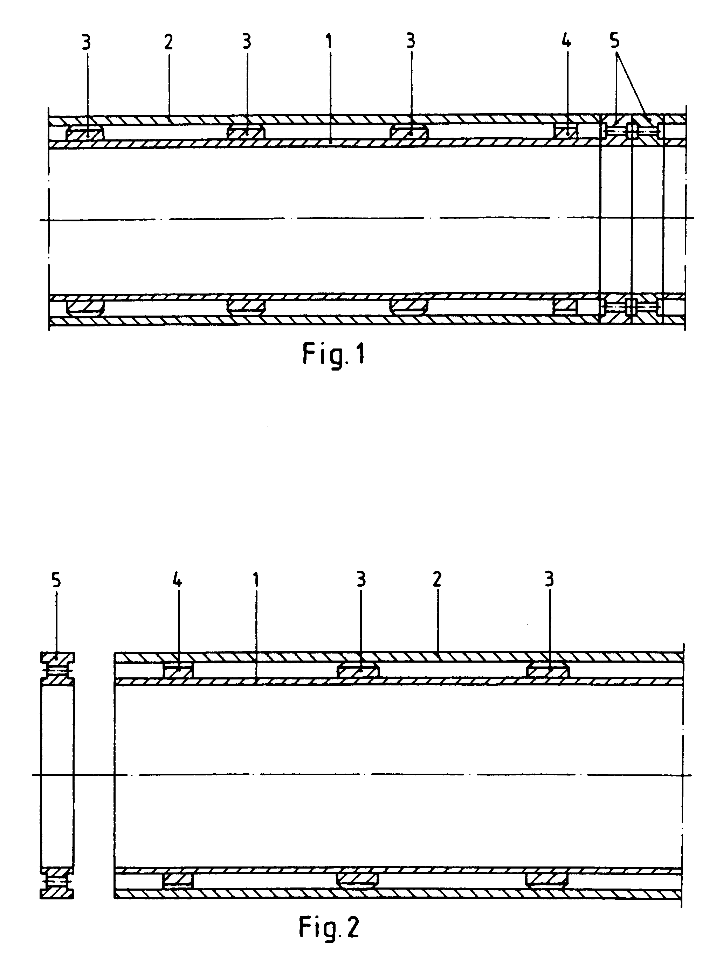

Die Anschlußringe **5** können ebenfalls jede denkbare Form besitzen, solange einerseits eine starre Verbindung zwischen Innen- und Außenrohr und andererseits eine gute Verschweißbarkeit der einzelnen Elemente gewährleistet ist. Einige sinnvolle Ausführungsformen gehen aus den Fig. 1 bis 7 hervor. Besonders bevorzugt ist die in Fig. 1 und 2 gezeigte Ausführungsform mit H-förmigem Querschnitt.

Als Werkstoffe können hierbei alle mit einem Heizelement schweißbaren Thermoplaste zum Einsatz kommen. Als Beispiele seien Polyethylen, Polypropylen, Polyvinylidenfluorid oder Polyamide genannt. Bevorzugt wird High-density-Polyethylen (PE-HD) verwendet. Es handelt sich hierbei um ein werkstoffhomogenes System, d. h. sämtliche durch Schweißen miteinander verbundenen Teile sowie vorzugsweise auch die mechanisch aufgebrachten Teile **3** und **4** bestehen aus dem gleichen Werkstoff.

Fig. 1 gibt ein gerades Rohrstück wieder, das aus einzelnen Doppelrohrelementen zusammengesetzt wurde.

Zur Herstellung von Innen- und Außenrohr werden hierbei nahtlos extrudierte oder gewickelte Rohre in einheitliche Stücke von beispielsweise 5 - 20 m Länge geschnitten.

Ein erfindungsgermäßes Doppelrohrelement wird auf folgende Weise hergestellt:
a) Soweit nötig, werden Abstandsringe **3** als Distanzhalter in regelmäßigen Abständen am Innenrohr angebracht. Sie werden vorzugsweise nach bekannten Methoden aufgeschrumpft, wodurch die Bildung von Schweißnähten bzw. eine Schwächung des Innenrohres durch eine Schraubverbindung umgangen wird.
b) Nun wird das Außenrohr über das Innenrohr gezogen.
c) Anschließend werden in beide Enden die Zentrierringe **4** durch Einpressen so eingebracht, daß eine konzentrische Lage von Innen- und Außenrohr gewährleistet ist.
d) Daraufhin wird derAnschlußring **5**, der mit dem Zentrierring **4** zusammen zentraler und neuartiger Funktionsträger des Systems ist, aufgeschweißt, vorzugsweise durch Heizelement-Stumpfschweissung in Anlehnung an das Merkblatt DVS 2207 des Deutschen Verbandes für Schweißtechnik e.V.. Fig. 2 gibt die Verhältnisse vor dem Zusammenschweißen wieder.
   Über den Anschlußring werden Innen- und Außenrohr starr miteinander verbunden, so daß keine Relativbewegung der Rohre gegeneinander möglich ist. Wanddicken- und Durchmessertoleranzen werden hierbei durch den Anschlußring ausgeglichen.
   Die so hergestellten Doppelrohrelemente sind damit montage- und verlegefertig.
   Der Anschlußring stellt gleichzeitig das Verbindungselement dar für die auf der Baustelle durchzuführende Heizelement-Stumpfschweißung der werkseitig vorgefertigten Doppelrohr- elemente. Dabei können handelsübliche Schweißmaschinen eingesetzt werden.

Die einzelnen Doppelrohrelemente werden hierbei beim Bau des Rohrleitungssystems wie Monorohre miteinander verschweißt.

Ein wesentlicher Vorteil der Kombination aus Anschlußring **5** und Zentrierring **4** besteht zudem in der dadurch erzielten Versteifung der Rohrschußenden.

Daher ist immer eine fachgerechte Verschweißung in Anlehnung an DVS 2207 auch bei geringen Wanddicken gewährleistet.

Bei einer bevorzugten Ausführungsform der vorliegenden Erfindung sind die Abstandsringe **3**, Zentrierringe **4** und Anschlußringe **5** in axialer Richtung ggf. mehrmals durchlocht, z. B. durchbohrt oder genutet, wie es auch in Fig. 1 bis 6 wiedergegeben ist. Auf diese Weise stehen die Ringspalte zwischen dem inneren medienführenden Rohr und dem äußeren Mantelrohr schußweise in Verbindung, so daß eine von außen oder innen eindringende Leckflüssigkeit mit einem dem Stand der Technik entsprechenden Leckwarnsystem aufgespürt bzw. über einen Ablaß abgeführt werden kann. Die Form der Löcher ist hierbei unkritisch.

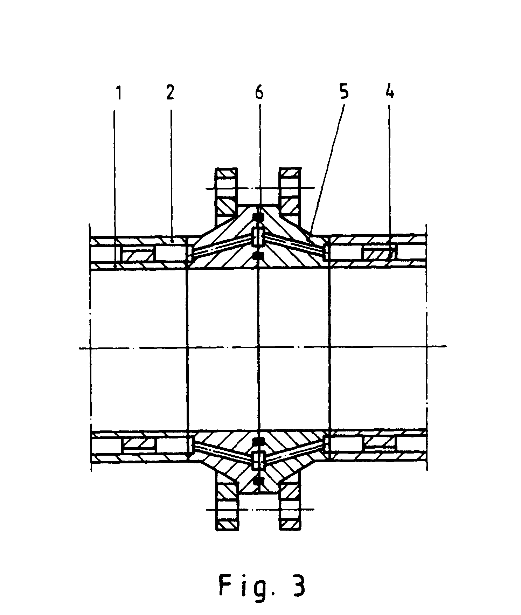

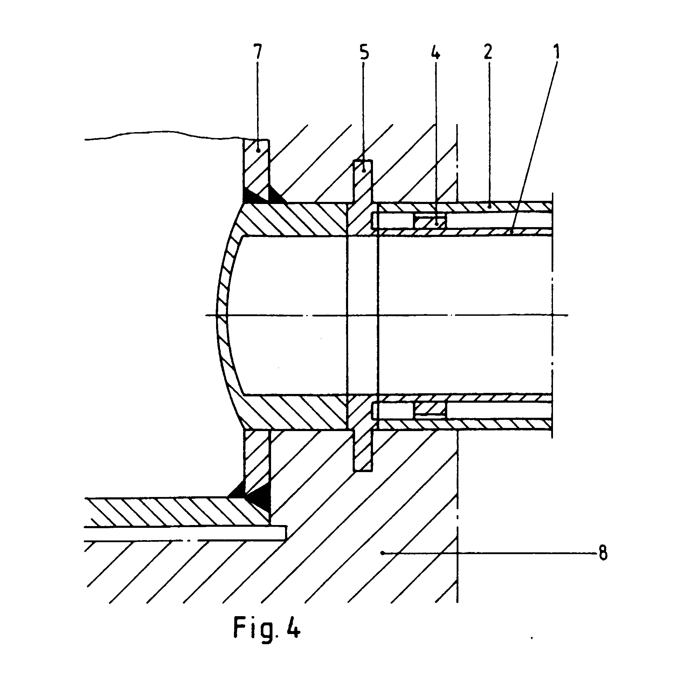

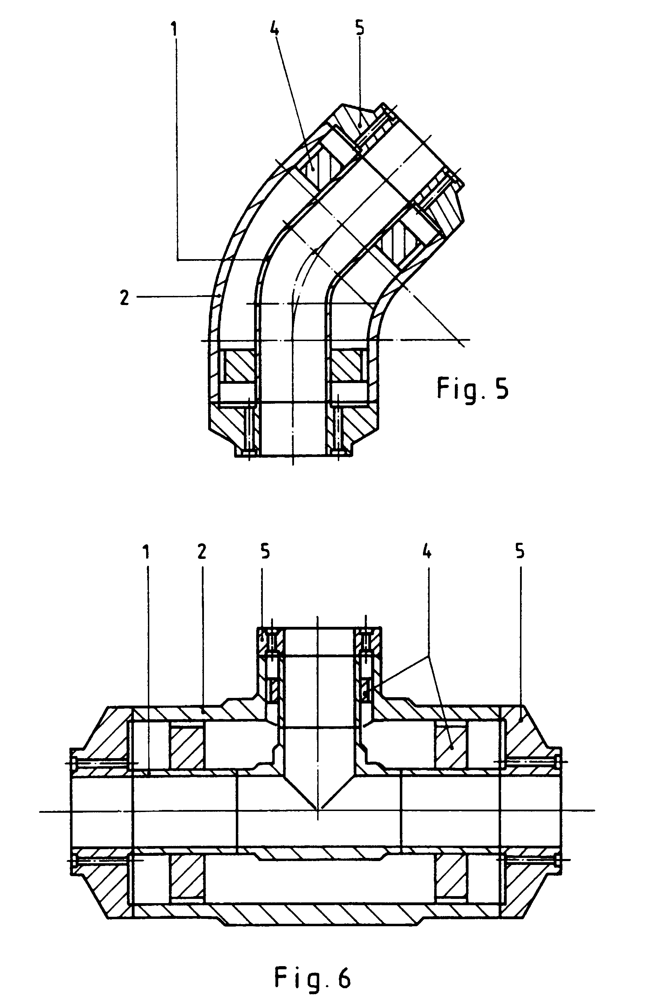

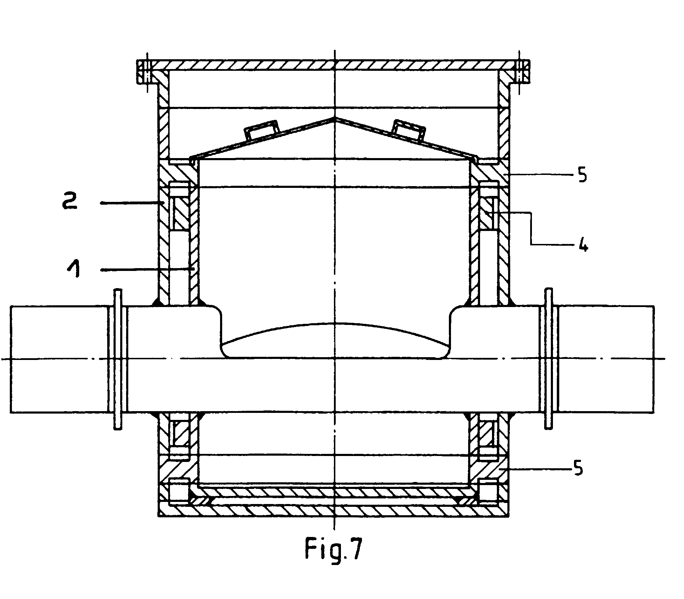

Folgende Beispiele verdeutlichen, daß das erfindungsgemäße Konstruktionsprinzip des Anschlußringes universell eingesetzt werden kann:
1. Mit einer Sonderausführung des Anschlußringes als Vorschweißbund sind lösbare Verbindungen möglich (Beispiel: Flanschverbindung (Fig. 3) oder Verbindung mittels Schnellkupplung). **6** ist in dieser Ausführungsform eine Ringnut zur Aufnahme von Dichtungsmaterial.
2. Bei starren Doppelrohrsystemen ist immer eine Festpunktkonstruktion erforderlich. Bei unterschiedlichen Temperaturen zwischen Innen- und Außenrohr muß die Dehnung des Innenrohres an den Festpunkten in Spannung umgesetzt werden. Fig. 4 zeigt das Ausführungsprinzip für die Anbindung des Doppelrohrsystems an den Festpunkt.
   7 ist in diesem Beispiel ein Schacht aus PE-HD-Rohr, **8** eine Betonschale.
3. Geometrische Variationen des Anschlußringes erlauben die Herstellung von Formteilen wie Bogen (Fig. 5) und T-Stücken (Fig. 6) in zweischaliger Ausführung unter Verwendung der erfindungsgemäßen Zentrier- und Anschlußringe. Bei kurzen Stücken werden keine Abstandsringe benötigt.
4. Das Konstruktionsprinzip des Anschlußringes wird auch beim Bau von doppelwandigen Sicherheitsschächten angewendet (Fig. 7). Auf einen zylindrischen doppelwandigen Rohrschuß mit Anschlußringen an den Enden wird ein doppelter Schachtboden angeschweißt Als Schachtdeckel können alle bekannten Konstruktionen eingesetzt werden.

Bei dem erfindungsgemäßen Doppelrohrelement handelt es sich um ein starres System, bei dem das Innenrohr schußweise starr mit dem Außenrohr verbunden ist. Damit wird das Innenrohr zuverlässig zentriert. Beim Vorliegen unterschiedlicher Temperaturen zwischen Außen- und Innenrohr ist kein Gleiten des Innenrohres möglich.

Ein weiterer Vorzug dieser Konstruktion gegenüber beispielsweise dem Rohrsystem der US-PS 4 786 088 liegt darin, daß die Qualitätssicherung wegen der werkseitigen Vormontage besonders einfach ist. Dies ist for den Transport aggressiver bzw. korrosiver Flüssigkeiten ausschlaggebend.

## Patentansprüche

1. Mit entsprechenden Elementen verschweißbares Doppelrohrelement aus thermoplastischem Kunststoff worin
a) an beiden Enden zwischen das Innenrohr **(1)** und das Außenrohr **(2)** je ein Zentrierring **(4)** durch Einpressen eingebracht ist;
b) an die beiden Enden je ein Anschlußring **(5)** angeschweißt ist, der Innen- und Außenrohr starr miteinander verbindet;
c) ggf. Abstandsringe **(3)** als Distanzhalter am Innenrohr angebracht sind.

2. Doppelrohrelement gemäß Anspruch 1, bei dem der Anschlußring **(5)** als Vorschweißbund ausgeführt ist, so daß eine Flanschverbindung oder ähnliche lösbare Verbindung möglich ist.

3. Doppelrohrelement gemäß Anspruch 1, bei dem der Anschlußring **(5)** für die Anbindung an einen Festpunkt geeignet ist.

4. Doppelrohrelement gemäß Anspruch 1, das als Bogen ausgeführt ist.

5. Doppelrohrelement gemäß Anspruch 1, das als T-Stück ausgeführt ist.

6. Doppelrohrelement gemäß Anspruch 1, das als Sicherheitsschacht ausgeführt ist, wobei ein doppelter Schachtboden angeschweißt sowie ein Schachtdeckel aufgesetzt ist.

7. Doppelrohrelement gemäß den Ansprüchen 1 bis 6,
dadurch gekennzeichnet,
daß es aus PE-HD besteht.

8. Doppelrohrelement gemäß den Ansprüchen 1 und 6,
dadurch gekennzeichnet,
daß derAnschlußring **(5)** einen H-förmigen Querschnitt aufweist

9. Doppelrohrelement gemäß den Ansprüchen 1 bis 8,
dadurch gekennzeichnet,
daß die Abstandsringe **(3)**, Zentrierringe **(4)** und Anschlußringe **(5)** in axialer Richtung ggf. mehrmals durchlocht sind.

10. Verfahren zur Herstellung der Doppelrohrelemente gemäß den Ansprüchen 1 bis 9,
dadurch gekennzeichnet, daß
a) ggf. Abstandsringe **(3)** als Distanzhalter am Innenrohr **(1)** angebracht werden,
b) das Außenrohr **(2)** über das Innenrohr **(1)** gezogen wird,
c) in beiden Enden Zentrierringe **(4)** durch Einpressen so eingebracht werden, daß eine konzentrische Lage von Innen- und Außenrohr gewährleistet ist d) und schließlich an den Enden der Anschlußring **(5)** aufgeschweißt wird.

11. Verwendung der Droppelrohrelemente gemäß den Ansprüchen 1 bis 8 zum Bau eines Rohrleitungssystems, wobei die einzelnen Doppelrohrelemente wie Monorohre miteinander verschweißt werden.

## Claims

1. A double-pipe element made of thermoplastic material and weldable with corresponding elements, wherein
a) a centring ring (4) is inserted by pressing between the inner pipe (1) and the outer pipe (2) at each end;
b) a connecting ring (5) which rigidly connects the inner pipe and outer pipe together is welded on at each end;
c) optionally, spacing rings (3) are mounted on the inner pipe as distance pieces.

2. A double-pipe element according to claim 1, in which the connecting ring (5) is designed as a welding neck, so that a flange connection or similar detachable connection is possible.

3. A double-pipe element according to claim 1, in which the connecting ring (5) is suitable for attachment to an anchor point.

4. A double-pipe element according to claim 1, which is designed as an arc.

5. A double-pipe element according to claim 1, which is designed as a T-piece.

6. A double-pipe element according to claim 1, which is designed as an escape shaft, a double shaft base being welded on and a manhole cover fitted on.

7. A double-pipe element according to any of claims 1 to 6, characterised in that it consists of PE-HD.

8. A double-pipe element according to either of claims 1 and 6, characterised in that the connecting ring (5) has an H-shape cross-section.

9. A double-pipe element according to any of claims 1 to 8, characterised in that the spacing rings (3), centring rings (4) and connecting rings (5) are perforated, if desired repeatedly, in the axial direction.

10. A process for the production of double-pipe elements according to any of claims 1 to 9, characterised in that
a) optionally spacing rings (3) are mounted as distance pieces on the inner pipe (1),
b) the outer pipe (2) is pulled over the inner pipe (1),
c) centring rings (4) are introduced into both ends by pressing in such a manner as to ensure a concentric position of inner pipe and outer pipe,
d) and finally the connecting ring (5) is welded on at the ends.

11. Use of the double-pipe elements according to any of claims 1 to 8 for the construction of a pipeline system, the individual double-pipe elements being welded together like mono-pipes.

## Revendications

1. Elément tubulaire double en matière thermoplastique, pouvant être soudé à des éléments correspondants, dans lequel
a) à chacune des deux extrémités, une baque de centrage (4) est introduite par emmanchement à force entre le tube intérieur (1) et le tube extérieur (2);
b) à chacune des deux extrémités, est soudée une bague de raccordement (5) qui relie rigidement entre eux le tube intérieur et le tube extérieur ;
c) éventuellement, des bagues d'écartement (3) sont montées sur le tube intérieur pour servir d'entretoise.

2. Elément tubulaire double selon la revendication 1, dans lequel la bague de raccordement (5) est réalisée sous la forme d'un collet de présoudage, de sorte qu'il est possible de réaliser un raccordement à bride un autre raccordement analogue.

3. Elément tubulaire double selon la revendication 1, dans lequel la bague de raccordement (5) est appropriée pour le raccordement à un point fixe.

4. Elément tubulaire double selon la revendication 1, qui est réalisé sous la forme d'un coude.

5. Elément tubulaire double selon la revendication 1 qui est réalisé sous la forme d'un T.

6. Elément tubulaire double selon la revendication 1, qui est réalisé sous la forme d'un regard, un fond de regard double étant soudé à cet élément et un couvercle de regard étant posé sur cet élément.

7. Elément tubulaire double selon les revendications 1 à 6, caractérisé en ce qu'il est composé de PE-HD.

8. Elément tubulaire double selon les revendications 1 et 6, caractérisé en ce que la bague de raccordement (5) présente une section en H.

9. Elément tubulaire double selon les revendications 1 à 8, caractérisé en ce que les bagues d'écartement (3), les bagues de centrage (4) et les bagues de raccordement (5) sont percées, éventuellement de plusieurs trous, dans la direction axiale.

10. Procédé de fabrication d'éléments tubulaires doubles selon les revendications 1 à 9, caractérisé en ce que
a) des bagues d'écartement (3) sont éventuellement placées sur le tube intérieur (1) en qualité de bagues entretoises ;
b) le tube extérieur (2) est enfilé sur le tube intérieur (1) ;
c) des bagues de centrage (4) sont disposées dans les deux extrémités par emmanchement à force de manière à assurer la concentricité des positions du tube intérieur et du tube extérieur;
d) et, finalement, la bague de raccordement (5) est soudée aux extrémités.

11. Emploi des éléments tubulaires doubles selon les revendications 1 à 8 pour la construction d'un réseau de canalisations tubulaires dans lequel le divers éléments tubulaires doubles sont soudés les uns aux autres de la même façon que des tubes simples.
